(19) Europäisches Patentamt

European Patent Office

Office européen des brevets

(11) **EP 1 109 843 B1**

(12) **EUROPEAN PATENT SPECIFICATION**

(45) Date of publication and mention
of the grant of the patent:
**01.09.2004 Bulletin 2004/36**

(51) Int Cl.$^7$: **C08F 210/06**, C10M 143/00,
C08F 8/00, C08F 8/32

(21) Application number: **99933012.9**

(22) Date of filing: **12.07.1999**

(86) International application number:
**PCT/GB1999/002229**

(87) International publication number:
**WO 2000/006621 (10.02.2000 Gazette 2000/06)**

(54) **ALPHA OLEFIN-DIENE COPOLYMERS**

ALPHA-OLEFIN-DIENE COPOLYMERE

COPOLYMERES D'ALPHA-OLEFINE/DIENE

(84) Designated Contracting States:
**AT BE CH CY DE DK ES FI FR GB GR IE IT LI LU
MC NL PT SE**

(30) Priority: **25.07.1998 GB 9816166
03.12.1998 GB 9826472**

(43) Date of publication of application:
**27.06.2001 Bulletin 2001/26**

(73) Proprietor: **BP Chemicals Limited
London EC2M 7BA (GB)**

(72) Inventors:
• **BLACKBOROW, John Richard
Edinburgh EH4 7BA (GB)**
• **WEATHERHEAD, Richard Henry
Addles tone, Surrey KT15 2XF (GB)**

(74) Representative: **Collins, Frances Mary et al
BP International Limited,
Group Patents and Agreements,
Chertsey Road
Sunbury-on-Thames, Middlesex TW16 7LN (GB)**

(56) References cited:
EP-A- 0 223 394      EP-A- 0 512 741
EP-A- 0 667 359      EP-A- 0 748 825
EP-A- 0 781 788      EP-A- 0 811 642
WO-A-91/17194      WO-A-94/19436
WO-A-97/08216      WO-A-98/49229
US-A- 4 340 705

**Description**

The present invention relates to oil soluble atactic copolymers which contain pendant groups having double bonds. The present invention also relates to oil soluble additives prepared from the copolymers and useful as additives for lubricating oil compositions.

In the copolymerisation of alpha olefins and non-conjugated alkadienes which have two double bonds it is desirable that only one of the double bonds is incorporated into the polymer chain so that the resulting copolymer has a branched structure with pendant groups having double bonds. The double bond in the pendant group could be either terminal or internal depending on the structure of the non-conjugated diene. For example, alpha-omega dienes could result in pendant groups having terminal double bonds whereas alkadienes having a vinylidene group could result in pendant groups having internal double bonds. The presence of these pendant groups is desirable as their double bonds are highly reactive and enable the copolymer to be chemically modified to a copolymer having at least one pendant functional group, said functional group being capable of undergoing further chemical reaction with another material, or imparting desirable properties not otherwise possessed by the original oil soluble copolymer. Such modified copolymers may be suitable for use in lubricating oil compositions. It is therefore desirable that both the unmodified and chemically modified copolymers are oil soluble.

Copolymers of alpha olefins and non-conjugated dienes are known in the art. International patent application, WO 97/08216 discloses diene-modified propylene polymers which are prepared by reacting under suitable polymerisation conditions, propylene and one or more alpha-omega dienes and a metallocene catalyst system. Exemplified are copolymers prepared from 1,13 tetradecadiene, 1,9-decadiene, 1,7-octadiene and norbornadiene. The diene-modified propylene polymers so prepared are isotactic.

EP-748825 describes the production of ethylene/alpha-olefin rubbers but without any indication that these materials are atactic. Further the reference is silent as to the degree of pendant groups having a double bond or 'H' branching.

EP-512741 describes the preparation of propylene random copolymers comprising repeating units derived from non-conjugated branched dienes in which said repeating units provide pendant groups having a double bond. The copolymers are however crystalline polymers.

US-4340705 describes the preparation of interpolymers of alpha-olefins and non-conjugated $\alpha,\omega$-polyenes. The interpolymers are rubbers but there is no disclosure that said rubbers are atactic.

EP-A- 0 811 642 discloses copolymers having a viscosity index (VI) of more than 160 derived from (A) 99.0-99.9 wt % of $C_2$ to $C_{20}$ alk-1-enes and (B) 0.01-1.0 wt % of $C_5$ to $C_{20}$ alpha-omega dienes. Exemplified are copolymers formed from dec-1-ene and 1,7-octadiene. Without wishing to be bound by any theory it is believed that under the reaction conditions employed in EP-A- 0811 642 the 1,7-octadiene has a marked tendency to insert into the polymer chain in a cyclic fashion i.e. the amount of pendant groups having a terminal double bond derived from the 1,7-octadiene would be low. This would account for the statement in EP-A- 0 811 642 that the copolymers are distinguished by chemical inertness. The copolymers of EP-A- 0811 642 are also said to be suitable for use directly as viscosity improvers in lubricants and motor oils. This confirms that the copolymers of EP-A- 0 811 642 have only low amounts of reactive pendant groups since the presence of reactive pendant groups having terminal double bonds would render the copolymers unsuitable for direct use as viscosity improvers.

International patent application, WO 98/49229 discloses a process for preparing amorphous polymers containing molecular units derived from propylene and molecular units derived from a polyene by contacting propylene and a polymerisable polyene in the presence of an amorphous polypropylene forming transition metal catalyst under polymerisation conditions. The polyenes used are non-conjugated polyenes having at least 7 carbon atoms and having two polymerisable double bonds. An exemplified polyene is 1,9 decadiene. WO 98/49229 discloses that such polyenes are not incorporated in the growing polymer in ring form but are preferentially reacted into different growing polymer backbones. This type of linkage is known as 'H'-type branching. The resulting polymers contain predominantly 'H'-type branching and a minimal number of intracbain rings. The existence of 'H'-type branching can be detected by $^{13}$C NMR.

The problem is therefore to find oil soluble atactic copolymers which have pendant groups having reactive double bonds and to find a method of preparing such copolymers. The advantage of pendant groups having reactive double bonds is that they can be chemically modified to provide functionalised polymers suitable for use as lubricating oil additives.

Thus according to the present invention there is provided an atactic copolymer having units derived from (a) at least one alpha olefin (b) optionally ethylene and (c) at least one non-conjugated diene selected from the group consisting of

(i) a diene of the Formula :

$$CH_2=C(R^1)-R^2-C(R^1)=CH_2 \tag{I}$$

wherein $R^1$ and $R^3$ are independently selected from hydrogen or an alkyl group, and $R^2$ is an alkylene moiety having a chain length of at least 3 carbon atoms
(ii) a diene of the Formula:

$$CH_2=C(R^1)-R^4-C(R^3)=CH-CH_3 \tag{II}$$

wherein $R^1$ and $R^3$ are as defined as for Formula (I) and $R^4$ is an alkylene moiety having a chain length of at least 1 carbon atom
(iii) a diene having a cyclic ring with one strained ring double bond and a substituent on the ring of the Formula :

$$=CR^5R^6 \tag{III}$$

wherein $R^5$ and $R^6$ are independently selected from hydrogen or a $C_1$-$C_3$ alkyl group and
(iv) a diene having a cyclic ring with one strained ring double bond and a substituent on the ring of the Formula :

$$-CR^7=CH_2 \tag{IV}$$

wherein $R^7$ is hydrogen or a $C_1$-$C_3$ alkyl group
with the proviso that where the copolymer has units derived from a diene of Formula (I) or a diene having a cyclic ring with one strained ring double bond and a substituent on the ring of Formula (IV) at least 30 mol% of any units derived from the diene provide pendant groups having a double bond and less than 2 mol% of said units provide 'H'-type branching.

The oil soluble copolymers of the present invention are atactic. By atactic is meant that the copolymer has substantially no isotactic or syndiotactic segments derived from the alpha-olefin which give rise to crystallinity, and where the copolymer has units derived from ethylene, the polymer has no significantly long segments (runs of ethylene) which give rise to crystallinity, as can be determined by the absence of a melting point and a heat of fusion of 0 J/g in DSC analysis (dynamic scanning calorimetry).

Where the copolymer has units derived from a diene of Formula (I) it is preferred that $R^1$ and $R^3$ are independently selected from hydrogen, methyl and ethyl, more preferably $R^1$ and $R^3$ are hydrogen. Preferably, $R^2$ is an alkylene moiety having a chain length of 3 to 22 carbon atoms i.e. the alkadiene preferably has a chain length of 7 to 26 carbon atoms. More preferably, $R^2$ is an alkylene moiety having a chain length of 5 to 8 carbon atoms i.e. the alkadiene has a chain length of 9 to 12 carbon atoms. Examples of suitable alkadienes of Formula (1) include 1, 7-octadiene, 1,8-nonadiene, 1, 9-decadiene, 1,10-undecadiene, and 1,11-dodecadiene, preferably 1,9-decadiene, 1,10-undecadiene, and 1,11-dodecadiene. Alkadienes of Formula (I) having a chain length of 9 to 12 carbon atoms are preferred because the alkadiene has less tendency to insert in a cyclic fashion to give cyclic units than alkadienes having a chain length of 7 or 8 carbon atoms. Thus, when the alkadiene is 1,9-decadiene, the resulting polymer has substantially no cyclic units.

Where the copolymer has units derived from a diene of Formula (II), $R^1$ and $R^3$ are preferably as defined above for Formula (I). Preferably $R^4$ is an alkylene moiety having a chain length of 1 to 21 carbon atoms i.e. the diene preferably has a chain length of 6 to 26 carbon atoms. More preferably, $R^4$ is an alkylene moiety having a chain length of 1 to 7 carbon atoms i.e. the diene has a chain length of 6 to 12 carbon atoms. Examples of suitable dienes of Formula (II) include 1,4-hexadiene, 1,5-heptadiene, 1,6-octadiene, 1,7-nonadiene, 1,8-decadiene, 1,9-undecadiene, and 1,10-dodecadiene, preferably 1,8-decadiene, 1,9-undecadiene, and 1,10-dodecadiene.

Where the copolymer has units derived from a diene having a cyclic ring with one strained ring double bond and a substituent on the ring of Formula (III) it is preferred that $R^5$ and $R^6$ are independently selected from hydrogen, methyl and ethyl, more preferably $R^5$ and $R^6$ are hydrogen or methyl. Examples of suitable dienes include ethylidene norbomene, 5-(1-methylethylidene)-norbornene and methylene norbomene.

Where the copolymer has units derived from a diene having a cyclic ring with one strained ring double bond and a substituent on the ring of Formula (IV) it is preferred that $R^7$ is selected from hydrogen, methyl and ethyl, more preferably $R^7$ is hydrogen or methyl. Examples of suitable dienes include vinyl norbornene and 5-(1-methylethenyl) norbornene.

The non-conjugated dienes which may be used to form the copolymer of the present invention insert into the copolymer chain mainly in a 1,2 or 2,1 fashion. Where the copolymer has units derived from dienes of Formula (I) or dienes having a cyclic ring with one strained ring double bond and a substituent on the ring of Formula (IV) some small degree of cyclic insertion may also be obtained. Thus, the copolymer product depending on the particular diene employed may contain at least three different structural repeat units, that is, (a) units derived from the alpha olefin(s), (b) pendant groups having double bonds and (c) saturated cyclic structures. Units (b) and (c) are derived from the non-conjugated diene. Non-conjugated dienes of Formula (I) or dienes having a cyclic ring with one strained ring double bond and a substituent on the ring of Formula (IV) will provide pendant groups having terminal double bonds. Non-conjugated dienes of Formula (II) or dienes having a cyclic ring with one strained ring double bond and a substituent on the ring of Formula (III) will generally provide pendant groups having internal rather than terminal double bonds. Preferably at least 40 mol % of the units derived from the diene provide pendant groups having double bonds rather than cyclic structures, more preferably at least 50 mol %, most preferably at least 60 mol %, for example, at least 80 mol%. Suprisingly, when the copolymer has units derived from a non-conjugated diene of Formula (I) or dienes having a cyclic ring with one strained ring double bond and a substituent on the ring of Formula (IV) the copolymer contains substantially no 'H'-type branching i.e preferably less than 2 mol% and, more preferably, less than 1 mol % of the units derived from the non-conjugated diene provide 'H'-type branching. The use of the non-conjugated dienes of Formula (II) or diolefins having one strained ring double bond and a substituent on the ring of Formula (III) result in pendant groups having internal double bonds. This has the advantage that such pendant groups cannot further react to give saturated cyclic structures or 'H'-type branching

Preferably, the pendant groups derived from the non-conjugated diene (hereinafter referred to as "pendant groups") have at least four carbon atoms, preferably at least six and, more preferably, at least eight carbon atoms in the pendant chain. Non-conjugated dienes of Formula (I) suitably provide pendant groups of Formula (V):

$$-R^2-C(R^3)=CH_2 \qquad\qquad (V)$$

wherein $R^2$ and $R^3$ are as defined above.
Non-conjugated dienes of Formula (II) suitably provide pendant groups of Formula (VI):

$$-R^4=C(R^3)-CH_3 \qquad\qquad (VI)$$

wherein $R^4$ and $R^3$ are as defined above
Dienes having a cyclic ring with one strained ring double bond and a substituent on the ring of Formula (IV) suitably provide pendant groups having a terminal double bond. Dienes having a cyclic ring with one strained ring double bond and a substituent on the ring of Formula (III) generally provide pendant groups with internal double bonds.

The copolymer chains of the present invention may have a vinylidene group, terminating one end of the chain (hereinafter referred to as a "vinylidene end group"). This is a result of the normal chain transfer mechanism as found in alpha olefin polymerisation. Preferably, the ratio of the olefinic moieties of the pendant groups to the vinylidene end group of the copolymer chain is in the range 0.1:1 to 4:1, more preferably 0.5:1 to 2:1, most preferably about 1: 1.

Typically, the copolymers of the present invention contain on average more than one olefinic moiety per copolymer chain, preferably they contain 1.1 to 5, more preferably 1.5 to 3, of such moieties per copolymer chain. By olefinic moiety is meant an internal double bond, a terminal double bond or a vinylidene moiety.

The content of the units derived from the non-conjugated diene in the copolymer is preferably between 0.02 and 15 mol %, more preferably between 0.02 and 10 mol %, more preferably between 0.02 and 5 mol % and most preferably between 0.02 and 3 mol %. The content of the units derived from the non-conjugated diene in the copolymer can also be expressed in weight percent, in which case, the content of the units derived from the non-conjugated diene is preferably between 0.05 and 20 wt %, more preferably between 0.05 and 15, more preferably between 0.1 and 5 and most preferably between 1 and 5 wt %.

Suitably the alpha olefin is a C3 to C10 alpha olefin, such as propylene, 1-butene, 3-methyl-1-butene, 1-pentene, 3-methyl-1-pentene, 4-methyt-1-pentene, 4,4-dimethyl-1-pentene, 3-ethyl-1-pentene, 1-hexene, 1-heptene, 1-octene, 1-nonene, and 1-decene, preferably the alpha-olefin is a C3 to C5 alpha olefin and more preferably propylene or 1-butene.

For copolymers having units derived from alpha-olefins and no ethylene, the content of the units derived from the alpha-olefin(s) is preferably between 0.01 and 99.9 mol %. For copolymers having units derived from at least one alpha olefin and ethylene, the content of the units derived from the alpha olefin(s) is preferably between 40 and 99.9 mol %, and is more preferably greater than 60 mol %.

The copolymers of the present invention are oil soluble. This means they are fully miscible with, for example, lubricating oils such as SN150, SN500, hydrocracked oils and synthetic lubricating oils such as polyalphaolefins. Furthermore, the copolymers of the present invention are non-crystallisable from such oil solutions at temperatures above - 40 °C, preferably non-crystallisable from such oil solutions at temperatures above - 30°C, more preferably they are non crystallisable from such oil solutions above - 20°C.

The copolymers of the present invention are generally viscous liquids at ambient temperature i.e 25°C. Preferably, the copolymers have a viscosity in the range 0.00005 - 0.010 $m^2$/s (50 cSt to 10 000 cSt), more preferably in the range 0.00005 - 0.005 $m^2$/s (50 to 5000 cSt) when measured at a temperature of 100 °C.

The copolymers according to the invention preferably have a viscosity index (VI) in the range between 90 and 350, more preferably in the range 90 and 200, even more preferably their VI is less than 160, most preferably lying in the range between 100 and 159, where the viscosity index is determined in the same manner described in EP-A-0 811 642 i.e. according to ISO 2909 by measuring the viscosities at 40 °C and 100 °C of a 10 wt % solution of the polymers and subsequent conversion according to the tables contained in the ISO standard. The solvent used is a solvent neutral 100 oil manufactured by the British Petroleum Company and sold under the trade name Enerpar 20.

The copolymers of the present invention have a number average molecular weight ($M_n$) in the range 300 to 200 000, preferably in the range 400 to 20 000, more preferably in the range 450 to 10 000, even more preferably in the range 500 to 5000. The number average molecular weight of the copolymers prepared according to the present invention may be tailored according to the application required. For example, Mn is maintained in the range from 300 to 10,000 for dispersant applications and from 15,000 to 200,000 for combined dispersant and viscosity index improver applications.

The present invention also provides a process for the preparation of an atactic copolymer having units derived from (a) at least one alpha olefin (b) optionally ethylene and (c) at least one non-conjugated diene selected from the group consisting of:

(i) a diene of the Formula:

$$CH_2=C(R^1)-R^4-C(R^3)=CH-CH_3 \qquad (II)$$

wherein $R^1$ and $R^3$ are independently selected from hydrogen or an alkyl group, and
and $R^4$ is an alkylene moiety having a chain length of at least 1 carbon atom
and
(ii) a diene having a cyclic ring with one strained ring double bond and a substituent on the ring of the Formula :

$$=CR^5R^6 \qquad (III)$$

wherein $R^5$ and $R^6$ are independently selected from hydrogen or a $C_1$-$C_3$ alkyl group which process comprises contacting (a) at least one alpha olefin (b) optionally ethylene with (c) at least one non-conjugated diene selected from (i) or (ii) above in a liquid phase polymerisation system in a polymerisation reactor in the presence of a metallocene catalyst.

For preparing an atactic copolymer according to the present invention, suitable catalysts comprise the reaction or complexation product of a cyclopentadienyl-containing transition metal compound (also referred to as a metallocene) and a cocatalyst. Alternatively, transition metal non-metallocene catalysts e.g Ziegler catalysts may be used. Suitable metallocene catalysts include the meso form of bridged metallocene catalysts, Constrained geometry catalysts and monocyclopentadienyl catalysts and unbridged metallocene catalysts. Examples of suitable meso form bridged metallocene catalysts, Constrained geometry and monocyclopentadienyl catalysts may be found in WO 98/49229. Typically an unbridged metallocene is used, for example $(C_5H_{5-n}R_n)_2MX_2$ where R = alkyl, preferably C 1 to C4 alkyl, M = Ti, Zr or Hf, X = alkyl such as C1 to C4; or halide, or a trifluoromethyl sulphonate (hereafter "triflate") and n has a value from 0 to 5. A suitable catalyst comprises a metallocene of the formula:

$$[R_mCpH_{(5-m)}][R_nCpH_{(5-n)}]M(Z)Y$$

wherein CpH is a cyclopentadienyl ligand, each R represents an alkyl or an aryl substituent on the CpH ligand or the R substituents on each CpH group when taken together represent an Si or C bridging group linking two CpH groups wherein said Si or C group may itself be substituted by hydrogen atoms or C1-C3 alkyl groups, M is a metal selected from hafnium, zirconium and titanium, Z is selected from a hydrogen atom, a halide, a "triflate", an alkyl or an aryl group, Y is selected from a halide, an alkyl or a 1,3-diketone, a β-ketoester and a triflate, and each of m and n is the same or different and has a value from 0 to 5. The metallocene is converted into an active polymerisation catalyst by reacting or combining it with a co-catalyst.

Preferably, for a copolymer having units derived from (a) at least one alpha-olefin (b) optionally ethylene and (c) at least one non-conjugated diene of Formula (I) or a diene having a cyclic ring with one strained ring double bond and a substituent on the ring of the Formula (IV) and having a number average molecular weight of 500 to 2000, e.g 1000 an unsubstituted metallocene is used. Examples of suitable unsubstituted metallocenes are unsubstituted bis cyclopentadienyl zirconium metallocenes such as bis cyclopentadienyl zirconium dichloride, bis cyclopentadienyl zirconium ditriflate, bis cyclopentadienyl zirconium dimethyl, bis cyclopentadienyl zirconium triflate hexafluoroacetylacetonate

Preferably, for a copolymer having units derived from (a) at least one alpha-olefin (b) optionally ethylene and (c) at least one non-conjugated diene of Formula (I) or a diene having a cyclic ring with one strained ring double bond and a substituent on the ring of the Formula (III)and having a number average molecular weight of 5000 to 10000 e.g 7500 an trisubsituted metallocene is used. Examples of suitable trisubstituted metallocenes are trisubstituted bis cyclopentadienyl zirconium metallocenes e.g bis(1,2,4 trimethyl cyclopentadienyl) zirconium dichloride, bis(1,2,4 trimethyl cyclopentadienyl) zirconium ditriflate, bis(1,2,4 trimethyl cyclopentadienyl) zirconium dimethyl, bis(1,2,4 trimethyl cyclopentadienyl) zirconium triflate hexafluoroacetyl acetonate.

Generally, for a copolymer derived from (a) at least one alpha-olefin (b) optionally ethylene and (c) at least one non-conjugated diene, any metallocene or transition metal non-metallocene catalyst e.g Ziegler catalyst may be used as long as the incorporation of the different monomers in the copolymer chain is random and the non-conjugated diene predominately inserts in the copolymer chain in a non-cyclic fashion. For example, random incorporation of ethylene in the copolymer may be achieved by ensuring that the amount of ethylene in the monomer feed to the polymerisation reaction is less than 50 % by weight of the total monomer content of the feed, preferably less than 30 % by weight of the total monomer content.

The process of the present invention is carried out in a liquid phase polymerisation system e.g solution, suspension or using a fixed bed. Preferably the process of the present invention is carried out continuously. When the polymerisation is carried out in the solution phase, typically the reactants and catalysts are dissolved in the polymerisation medium. The polymerisation medium may include an inert diluent. Typically, the inert diluent may be a saturated or unsaturated hydrocarbon, for example a saturated or unsaturated aromatic or halogenated hydrocarbon which does not adversely interfere with the polymerisation reaction. Suitable inert diluents include toluene, xylene, isobutane, propane and hexane. Preferably the catalyst is present in the polymerisation medium at a concentration in the range 1 to 100 micromoles/litre, more preferably in the range 5 to 20 micromoles/litre. When the process of the present invention is carried out in suspension or a continuous fixed bed, the catalyst is supported on a support material. Suitable support materials are well known in the art and include silica and alumina.

The catalyst may be used in conjunction with a cocatalyst. The cocatalyst may be comprised of an alkyl aluminoxane, preferably methyl aluminoxane, with or without the addition of a Group III metal alkyl e.g an alkyl aluminium or an alkyl boron A preferred alkyl aluminium is tri-isobutyl aluminium. A preferred alkyl boron is tri-sec-butyl boron

The aluminoxane is preferably used in an amount such that the molar ratio of metallocene or transition metal non-metallocene catalyst e.g Ziegler catalyst to aluminoxane lies in the range 1:1 to 1:2000, more preferably the ratio lies in the range 1:1 to 1:400 (based on the molar amount of aluminium). When tri-isobutyl aluminium is used the molar ratio of metallocene catalyst to aluminoxane to tri-isobutyl aluminium suitably lies in the range from 1:50:400 to 1:500: 500.

The cocatalyst may also be a Lewis acid for example tris (pentafluorophenyl) boron or trityl tetra(pentafluorophenyl) borate when used in combination with the dialkyl derivative of the metallocene. Typically the boron or borate cocatalyst is present in an equimolar amount to the metallocene catalyst.

The cocatalyst may be supported. When a supported catalyst system is used preferably the catalyst and cocatalyst are supported on the same material.

The polymerisation can take place in an inert atmosphere at atmospheric or super atmospheric pressure, preferably at a pressure in the range 10 to 200 bar, more preferably at a pressure in the range 10 to 50 bar.

The polymerisation may take place at a temperature in the range -50 to 300 °C, more preferably at a temperature in the range 20 to 120 °C.

Variation of the reaction temperature, monomer or catalyst/cocatalyst concentrations or pressure can be used to control both the molecular weight of the polymers, the quantity of alkadiene polymerised and the rate of polymer production. For example, a product of relatively low molecular weight may be achieved by running the reaction at a higher temperature. For example, where it is desired to obtain a copolymer of a number average molecular weight of less than or equal to 10,000 and having units derived from a non-conjugated diene of Formula (I) or a diene having a cyclic ring with one strained ring double bond and a substituent on the ring of the Formula (IV), the polymerisation temperature is preferably greater than 40°C.

The polymerisation reaction can be quenched by methods known in the art, for example by adding water or a lower alcohol such as ethanol or isopropanol.

In the process to prepare a copolymer having units derived from (a) at least one alpha-olefin (b) optionally ethylene and (c) at least one non-conjugated diene of Formula (I) or a diene having a cyclic ring with one strained ring double bond and a substituent on the ring of the Formula (IV), the polymerisation reaction is preferably monitored by solution 13C NMR to detect the existence of 'H'-type branching. Monitoring may be either at regular intervals, or, preferably continuously. The polymerisation reaction should be quenched or killed with a suitable killing agent when the amount of units derived from the diene which provide 'H'-type branching reaches a value of no more than 2 mol%.

The catalyst residues can be removed by filtration, if necessary, or left in the product or on the catalyst support.

The diluent can be removed from the reaction medium (which comprises the polymer product, diluent, unreacted alkadiene, alpha olefin and optionally ethylene, inactive residues of catalyst and cocatalyst) by evaporation under reduced pressure.

A further aspect of the present invention relates to an oil soluble copolymer having at least one pendant functional group obtainable by chemical modification of at least one pendant group of an atactic copolymer as defined above, said at least one pendant functional group being (a) capable of undergoing further chemical reaction with another material, or (b) imparts desirable properties not otherwise possessed by the atactic copolymer, or both (a) and (b).

The preferred oil soluble copolymer is defined in claims 10-11.

A proportion of the double bonds may be unmodified. However, it is preferred that at least 50%, more preferably at least 80%, still more preferably at least 90%, and most preferably substantially all of the pendant groups having double bonds are chemically modified.

Preferably, the "vinylidene end group" of the polymer will also be chemically modified to give a functional group.

Useful and preferred functional groups include halogen, carboxyl moieties present as acids, esters, salts, or anhydrides, alcohols, amines, ketones, aldehydes and the like, as described in US 5,498,809.

Useful functionalisation reactions include: maleinisation, which is the reaction of the copolymer at the point of unsaturation (pendant olefinic group or vinylidene end group) with maleic acid or anhydride; halogenation of the copolymer and subsequent reaction of the halogenated copolymer with an amine or ethylenically unsaturated functional compound; reaction of the copolymer with an unsaturated functional compound by the "ene" reaction in the absence of halogenation; reaction of the copolymer with at least one phenol group (this permits derivitisation in a Mannich base-type condensation); reaction of the copolymer at its point of unsaturation with carbon monoxide using a Koch-type reaction wherein an acid group such as an iso acid or neo acid is formed; reaction of the copolymer with the functional compound by free radical addition using a free radical catalyst; and reaction of the copolymer by air oxidation methods, epoxidation, chloroamination or ozonolysis.

Thus, according to yet a further aspect of the present invention there is provided a copolymer functionalised with reactive groups such as by substitution with at least one mono- or di-carboxylic acid or mono- or di-carboxylic acid derivatives for example acid anhydrides or acid esters produced by reacting the copolymers of present invention with mono-unsaturated carboxylic reactants via thermal or radical initiated reactions, as described in US 5,498,809. The monocarboxylic acid and dicarboxylic acid or anhydride substituted copolymers are useful per se as additives for lubricating oils and, in another aspect of this invention, can also be reacted with nucleophilic reagents such as amines, alcohols, amino alcohols and metal compounds, to form derivative products which are also useful as lubricating oil additives, for example, as dispersants. Suitable nucleophilic reagents and reaction conditions are described in US 5,498,809.

The preferred use of the oil soluble copolymers is defined in claim 12.

In another aspect of this invention, lubricating oil additives are produced by functionalising the copolymers of the present invention by reaction with an hydroxyaromatic compound in the presence of a catalytically effective amount of at least one acidic alkylation catalyst. Suitable alkylation catalysts include boron trifluoride complexes with alcohols or ethers. The alcohols or ethers may be primary, secondary or tertiary alcohols or ethers. The boron trifluoride/alcohol or ether complexes may be formed in situ or may be preformed. Preferred complexes include boron trifluoride/isopropanol complexes and boron trifluoride diethylether complexes. A preferred hydroxyaromatic compound is phenol. Subsequently, the alkylated hydroxyaromatic compound can be reacted by Mannich Base condensation with an aldehyde and an amine reagent to provide a derivatised polymer.

Lubricating oil additives may also produced by the oxidation of the copolymer of the present invention, such as oxidation with a gas containing oxygen and/or ozone. The copolymer can also be functionalised by hydroformylation, by epoxidation and by employing the Koch reaction (see US 5,498,809). Such functionalised copolymers can be derivatised by reaction with at least one derivatising compound to form derivatised copolymers.

An advantage of the copolymers of the present invention is that because they contain pendant groups having olefinic moieties in addition to a "vinylidene end group", the lubricating oil additives (e.g. dispersant additives) produced therefrom have high active ingredient concentrations, thereby providing, for example, enhanced lubricating oil dispersancy and in some cases such additives can be cross-linked.

The invention will now be illustrated by the following examples.

## Copolymer preparation (Examples 1-4)

A 3 litre autoclave was heated to approximately 100 °C, and simultaneously thoroughly purged by passing a stream of dry nitrogen through it. The autoclave was then allowed to cool to room temperature (25 °C). Into the autoclave was introduced (a) 1 litre of dry toluene via a transfer line, (b) either triisobutyl aluminium (TiBA) (4ml of a 1M solution in toluene) or 8ml of 10% solution of MAO (methyl aluminoxane) in toluene and (c) the desired amount of diene which had been freshly distilled from calcium hydride. The autoclave was then sealed and 1 litre of liquid propylene transferred to it. The contents of the autoclave were then stirred at 70 °C. The pressure and temperature of the autoclave were logged continuously. The autoclave was flushed with nitrogen and (a) a 12.5 micromoles solution in toluene of bis (1,3 dimethyl cyclo pentadienyl) zirconium dichloride as catalyst and (b) a 3 millimoles solution of methylaluminoxane as co-catalyst were added by syringe into an injection port in communication with the autoclave. After ten minutes, this mixture was injected into the autoclave under a positive pressure of nitrogen and the reaction was allowed to run for the desired period (see Table 1). After venting the reactor, the liquid product was drained into a vessel containing a sufficient amount of isopropanol to kill the catalyst. The resultant product was then washed, initially with a little dilute hydrochloric acid (200 ml) and then with distilled water (200 ml), dried with magnesium sulphate, filtered and the solvent removed by evaporation. Further details of the preparation and the properties of the resulting copolymers are shown in Tables 1 and 2.

## Copolymer Preparation (Example 4a)

A 3 litre autoclave was heated to approximately 100 °C, and simultaneously thoroughly purged by passing a stream of dry nitrogen through it. The autoclave was then allowed to cool to room temperature (25 °C). Into the autoclave was introduced (a) 0.5 litres of dry toluene via a transfer line, (b) triisobutyl aluminium (TiBA) (5ml of a 1M solution in toluene), (c) 0.28 mol (45ml) of 1-octene and (d) 0.33 moles (40g) of ethylidene norbornene. The autoclave was then sealed and 1.5 litres of liquid propylene transferred to it. The contents of the autoclave were then stirred at 50 °C. The pressure and temperature of the autoclave were logged continuously. The autoclave was flushed with nitrogen and (a) a 60 micromoles solution in 16 ml of toluene of bis (1,2,4 trimethyl cyclopentadienyl) zirconium dichloride as catalyst and (b) a 20 ml of 10% solution of methylaluminoxane as co-catalyst were added by syringe into an injection port in communication with the autoclave. After ten minutes, this mixture was injected into the autoclave under a positive pressure of nitrogen and the reaction was allowed to run for one hour. 20 ml of ethanol were then injected into the autoclave to kill the reaction. After venting the reactor, the liquid product was drained into a vessel. The liquid product was then stirred with damp silica gel to remove any catalyst residues and subsequently filtered. After filtering, the solvent (toluene) was removed by rotary evaporation to give a viscous liquid product. The viscous liquid product was then heated to approximately 100°C under high vacuum (0.01 mbar) until all residual monomers had been removed. $^{13}$C NMR analysis of the copolymer product obtained indicated that the polymer was had 98 mol% propene units, 1 mol% 1-octene units and 1 mol% ethylidene norbornene units.

Further details of the preparation and the properties of the resulting copolymer is given in Tables 1 and 2.

Table 1

| Reaction of Diene With Propene | | | | | | | |
|---|---|---|---|---|---|---|---|
| | Diene | Gram-Moles diene added to the reactor | Gram-Moles of propene added to reactor | Reaction Time /mins | Mole % diene in copolymer | Approx. Reactivity Ratio | Copolymer Yield/g |
| Experiment A | 1,5-hexadiene | 0.5 | 12.5 | 50 | 2.1 | 0.5* | 300 |
| Experiment B | 4-vinylcyclohexene | 0.5 | 12.5 | 120 | 0 | 0 | 315 |

* Approximately unity if both double bonds considered in cyclisation reaction

Table 1   (continued)

| Reaction of Diene With Propene | | | | | | | |
|---|---|---|---|---|---|---|---|
| | Diene | Gram-Moles diene added to the reactor | Gram-Moles of propene added to reactor | Reaction Time /mins | Mole % diene in copolymer | Approx. Reactivity Ratio | Copolymer Yield/g |
| Experiment C | 2-methyl-1,5-hexadiene | 0.5 | 12.5 | 160 | 4 | 1 | 300 |
| Example 1*** (R602) | 1,7-octadiene | 0.25 | 12.5 | 160 | 0.9 | 0.6* | 300 |
| Example 2*** (R 664) | 1,9-decadiene | 0.5 | 12.5 | 70 | 3-4 | ~1 | 310 |
| Example 2a**(R727) | 1,9-decadiene | 0.25 | 12.5 | 140 | 2.4 | ~1 | 300 |
| Example 3**(R603) | 1,7-octadiene | 0.25 | 12.5 | 120 | 1.0 | 0.6* | 250 |
| Example 4***(R604) | 1,7-octadiene | 0.5 | 12.5 | 140 | 1.9 | 0.5* | 340 |
| Example 4a**** | ethylidene norbornene | 0.33 | 18.75 | 60 | 1.0 | 0.57 | 280 |

* Approximately unity if both double bonds considered in cyclisation reaction

** Made using TiBA in step (b)

***Made using MAO in step (b)

**** 0.28 mol 1-octene were also added as a comonomer

In Experiments A, B and C the copolymers produced are not according to the invention. In Examples 1, 2 and 2a, 3, 4 and 4a the copolymers produced are according to the invention. The mole percentage diene in the copolymer was determined using $^{13}$C NMR and $^1$H NMR. The approximate reactivity ratio is the mole ratio of diene to C3 alpha olefin in the copolymer product divided by the mole ratio of diene to C3 alpha olefin in the reactant feed. The closeness of the reactivity ratio to unity suggests that the level of diene incorporation can be controlled by simple variation of the diene level in the feedstock.

Table 2

| | Diene in the propylene-diene copolymer (polymer) | Mn | Mol% diene in copolymer | % incorporated diene with free olefin bond /% diene cyclised | vinyl as % of total unsaturation |
|---|---|---|---|---|---|
| Experiment A | 1,5-hexadiene (R605) | 3100 | 2.1 | 0/100 | 0 |
| Experiment B | 4-vinylcyclohexene (R608) | 3000 | 0 | ------- | ------- |
| Experiment C | 2-methyl 1,5-hexadiene | 1300 | 4 | 0/100 | 0 |
| Example 1 | 1,7-octadiene (R602) | 1970* 1840** 1880*** | 0.9 | 40/60 | 13* 16** |

$^{13}$C nmr; ** $^1$H nmr; *** GPC calibrated to Vapour Pressure Osmometry (VPO) for atactic polypropylene.

------ means not measured

Table 2   (continued)

| | | Diene in the propylene-diene copolymer (polymer) | Mn | Mol% diene in copolymer | % incorporated diene with free olefin bond /% diene cyclised | vinyl as % of total unsaturation |
|---|---|---|---|---|---|---|
| | Example 2 | 1,9-decadiene (R664) | 4270* | 3-4 | 100/0 | 69.7 |
| | Example 2a | 1,9-decadiene (R727) | 1700* 1800** 1600**** | 2.4 | 100/0 | 50 |
| | Example 3 | 1,7-octadiene (R603) | 3360* 3230** 3040*** | 1.0 | 43/57 | 24* 23** |
| | Example 4 | 1,7-octadiene (R604) | 1900* 1792** 1980*** | 1.9 | 41/59 | 26* 24** |
| | Example 4a | ethylidene norbomene | 23,000 | 1.0 | 100/0 | 5.3***** |

$^{13}$C nmr; ** $^1$H nmr; *** GPC calibrated to Vapour Pressure Osmometry (VPO) for atactic polypropylene.

****By GPC calibrated with atactic polypropylene; Mw/Mn of sample = 3.8

***** ethylidene as % of total unsaturation

The percentage incorporated diene with free olefin bond and the percentage of diene cyclised were measured using $^{13}$C NMR. The percentage unsaturation in the copolymers due to terminal vinyl groups was also measured using $^{13}$C NMR. The level of unreacted diene in the final product was measured by gas chromatography and found to account for less than 3% of the measured vinyl concentration as shown in Table 2. From Table 2 it can be seen that the copolymers according to the invention, i.e. the copolymers of Examples 1, 2, 2a, 3, 4 and 4a all have pendant groups present whereas the copolymers not according to the invention, i.e. the copolymers of Experiments A, B and C, do not.

Some of the above copolymers were used in functionalisation reactions to illustrate their usefulness as oil additive components

## Example 5

20 g of the copolymer of Example 3 (R603) was dissolved in 50 ml of chlorobenzene and added to a solution of 8 g of phenol in 200ml of chlorobenzene. Then 1g of BF$_3$diethylether was added and the resulting mixture was stirred under an inert atmosphere at 40 °C for 6 hours. Ammonia gas was then carefully added until the mixture was neutralised. The mixture was cooled to ambient temperature and filtered and the solvent and excess phenol were removed by evaporation under reduced pressure at approximately 100 °C. An alkylated phenol remained as a residue.

## Example 6

This example involves the preparation of an amine functionalised copolymer. 10 g of the copolymer of Example 3 (R603) was dissolved in 60 ml of dichloromethane and a solution of 0.01 mol of metachloroperbenzoic acid in 100 ml of dichloromethane was added. Both solutions were at 30 °C. The resulting mixture was stirred for two hours then crystallised by cooling. Unreacted metachloroperbenzoic acid was removed together with by-product chlorobenzoic acid by filtration at low temperature. Some solvent was removed by evaporation under reduced pressure and the crystallisation /filtration process repeated. The organic solution, now freed from acids in this way, was evaporated under reduced pressure to remove solvent and a viscous liquid was recovered. The viscous liquid contained epoxide groups and no olefin double bonds, as * verified by NMR. This liquid was reacted with 0.2 mol of dimethylaminopropane at 100 °C to give an amine functionalised copolymer.

## Examples 7 to 10

These examples involve the preparation of succinic anhydrides of the copolymers and the subsequent preparation of succinimides from these succinic anhydrides. Weighed quantities of the copolymer and maleic anhydride were placed in a 600 ml Parr (trade name) autoclave and the autoclave was purged with nitrogen and sealed. The autoclave was then heated quickly to the control temperature and the contents thereof stirred at 500 rpm for the duration of the reaction (see Table 3). The autoclave was then rapidly cooled to 100 °C and depressurised. The resulting succinic anhydride products were then placed in a Buchi Rotavapor and excess maleic anhydride was removed under vacuum at 180 °C. The residual copolymers were cooled and then dissolved in heptane and filtered through a Celite (trade name) filter aid. The solvent was then removed by evaporation. The preparative conditions and the properties of these anhydrides are recorded in Table 3. In Example 10, 60 mls of xylene was used as a solvent in the reaction of the copolymers with maleic anhydride.

Table 3

|  | Copolymer of | Amount of copolymer /g | Maleic Anhydride /g | Time@ temperature | Succinic anhydride Active Matter | Succinic anhydride Acid number mg KOH/g |
| --- | --- | --- | --- | --- | --- | --- |
| Example 7 | Example 4 | 50 | 11.2 | 5hrs @ 230°C | 96 | 78.6 |
| Example 8 | Example 3 | 50 | 9.8 | 5hrs @ 230°C | 89 | 56.8 |
| Example 9 | Example 1 | 50 | 11.7 | 5hrs @ 230°C | 97 | 76.3 |
| Example 10 | Example 2 | 50 | 16.3 | 6hrs @ 220°C | 97 | 82.1 |

The succinic anhydrides of Examples 7 to 10 in Table 3 were reacted with triethylene tetramine in solvent neutral 150 or SN 150 oil (sold by BP Oil under the trade name Enerpar 11) using one mole of amine for every two moles of anhydride groups in the copolymer chain. The reaction was carried out by reacting a mixture of about 20 wt % succinic anhydride with about 80 wt % SN150 oil at 185 °C for three hours with the amine in a stirred flask with a small nitrogen gas bleed. The resulting solutions from the reactions using the succinic anhydrides of Examples 7 and 8 were diluted using SN 150 oil so as to comprise 90 wt % oil and their viscosity indices were measured. These are shown in Table 4.

Table 4

| 10 % SN150 solution of succinimide from | Viscosity Index |
| --- | --- |
| succinic anhydride of Example 7 (Copolymer of Example 4 (R604)) | 133 * |
| succinic anhydride of Example 8 (Copolymer of Example 3 (R603)) | 154* |
| pure SN150 oil | 72+, 98* |

* U tube viscometer; + Haake Cone and Plate Viscometer

## Example 11

The viscosity index of each of the copolymers of Example 1 (R602), Example 2 (R664), Example 2a (R727), Example 3 (R603) and Example 4 (R604) was determined in the same manner described in EP-A-0 811 642 i.e. according to ISO 2909 by measuring the viscosities at 40 °C and 100 °C of a 10 wt % solution of the copolymers and subsequent conversion according to the tables contained in the ISO standard. The solvent used is a solvent neutral 100 oil, Enerpar 20, manufactured by the British Petroleum Company. The results are shown in Table 5.

Table 5

| Copolymer of | Viscosity Index |
| --- | --- |
| Example 1 (R602) | 121 |
| Example 2 (R664) | 154 |
| Example 2a (R727) | 136 |

Table 5   (continued)

| Copolymer of | Viscosity Index |
|---|---|
| Example 3 (R603) | 135 |
| Example 4 (R604) | 124 |

## Example 12

This example involves the preparation of succinic anhydrides of the copolymers and the subsequent preparation of succinimides from these succinic anhydrides.

75g of the copolymer of Example 2a (R727) was placed in a 300 ml Parr (trade name) autoclave together with 13.13 g of maleic anhydride. The autoclave was sealed and purged with nitrogen. The autoclave was then heated quickly to 230 °C and the contents thereof stirred at 500 rpm for five hours. The autoclave was then rapidly cooled to 100 °C, depressurised and opened. The autoclave contents were discharged into a Buchi Rotavapor (trade name). In the Buchi Rotavapor excess maleic anhydride was removed from the autoclave product under vacuum at 200 °C for ninety minutes. The contents of the Buchi were then dissolved in heptane and the solution filtered on a Celite filter bed. The filtrate was collected and stripped of heptane under vacuum at 180 °C, leaving a clear light brown viscous liquid (P1). This liquid (P1) was found to have an acid number of 94.6 mgKOH/g and an active matter content (as measured by polar conversion) of 91.3wt%.

9.97g of the liquid P1, was added to a three necked flask and diluted with 45g of solvent neutral 100 oil (Enerpar 20). The oil solution was heated with stirring to 180 °C and 0.623mls of triethylene tetramine was added over circa fifteen minutes to the flask contents from a syringe. The contents were stirred at 180 °C whilst being further diluted to 10 wt % with more SN 100 oil. This 10 wt % solution stirred at 180 °C for a total of three hours whilst a small bleed of nitrogen gas was passed through the solution. The contents of the flask were then finally cooled, the viscosity was measured at 40 and 100 °C and the viscosity index of the solution was calculated to be 172.

## Claims

1.   An atactic copolymer having units derived from (a) at least one alpha olefin (b) optionally ethylene and (c) at least one non-conjugated diene selected from the group consisting of

   (i) a diene of the Formula :

$$CH_2=C(R^1)-R^2-C(R^3)=CH_2 \qquad (I)$$

   wherein $R^1$ and $R^3$ are independently selected from hydrogen or an alkyl group, and $R^2$ is an alkylene moiety having a chain length of at least 3 carbon atoms
   (ii) a diene of the Formula:

$$CH_2=C(R^1)-R^4-C(R^3)=CH-CH_3 \qquad (II)$$

   wherein $R^1$ and $R^3$ are as defined as for Formula (I) and $R^4$ is an alkylene moiety having a chain length of at least 1 carbon atom
   (iii) a diene having a cyclic ring with one strained ring double bond and a substituent on the ring of the Formula :

$$=CR^5R^6 \qquad (III)$$

   wherein $R^5$ and $R^6$ are independently selected from hydrogen or a $C_1$-$C_3$ alkyl group and
   (iv) a diene having a cyclic ring with one strained ring double bond and a substituent on the ring of the Formula :

$$-CR^7=CH_2 \qquad (IV)$$

wherein $R^7$ is hydrogen or a $C_1$-$C_3$ alkyl group

with the proviso that where the copolymer has units derived from a diene of Formula (I) or a diene having a cyclic ring with one strained ring double bond and a substituent on the ring of Formula (IV) at least 30 mol% of any units derived from the diene provide pendant groups having a double bond and less than 2 mol% of said units provide 'H'-type branching.

2. A copolymer according to claim 1 wherein the diene is selected from the group consisting of 1,7 octadiene, 1,8 nonadiene, 1,9 decadiene, 1,10 undecadiene, 1,11 dodecadiene, vinyl norbornene, 5-(1-methylethylidene) norbomene, 1,4-hexadiene, 1,5-heptadiene, 1,6 octadiene, 1,7 nonadiene, 1,8 decadiene, 1,9 undecadiene, 1,10 dodecadiene, ethylidene norbornene, methylene norbornene and 5-(1-methylethenyl) norbornene.

3. A copolymer according to claim 1 or claim 2 wherein less than 1 mol% of the units derived from the diene of Formula (I) or a diene having a cyclic ring with one strained ring double bond and a substituent on the ring of the Formula (IV) provide 'H'-type branching.

4. A copolymer according to any one of claims 1 to 3 wherein the content of the units derived from the diene is between 0.02 and 15 mol%.

5. A copolymer according to any one of claims 1 to 4 wherein the average number of olefinic moieties per copolymer chain is 1.1 to 5.

6. A copolymer according to any one of claims 1 to 5 wherein the copolymer has a viscosity index in the range 90 to 350 as determined by ISO 2909.

7. A copolymer according to any one of claims 1 to 6 wherein the copolymer has a number average molecular weight in the range 300 to 200,000.

8. A process for the preparation of an atactic copolymer having units derived from

   (a) at least one alpha olefin (b) optionally ethylene and (c) at least one non-conjugated diene selected from the group consisting of:

   (i) a diene of the Formula:

$$CH_2=C(R^1)-R^4-C(R^3)=CH-CH_3 \qquad\qquad (II)$$

   wherein $R^1$ and $R^3$ are independently selected from hydrogen or an alkyl group, and
   and $R^4$ is an alkylene moiety having a chain length of at least 1 carbon atom
   and
   (ii) a diene having a cyclic ring with one strained ring double bond and a substituent on the ring of the Formula :

$$=CR^5R^6 \qquad\qquad (III)$$

   wherein $R^5$ and $R^6$ are independently selected from hydrogen or a $C_1$-$C_3$ alkyl group which process comprises contacting (a) at least one alpha olefin (b) optionally ethylene with (c) at least one non-conjugated diene selected from (i) or (ii) above in a liquid phase polymerisation system in a polymerisation reactor in the presence of a metallocene catalyst.

9. A process according to claim 8 wherein the diene is selected from the group consisting of 1,4-hexadiene, 1,5-heptadiene, 1,6 octadiene, 1,7 nonadiene, 1,8 decadiene, 1,9 undecadiene, 1,10 dodecadiene, ethylidene norbornene, methylene norbornene and 5-(1-methylethylidene) norbornene.

10. An oil soluble copolymer obtainable by reacting a copolymer as claimed in any one of claims 1 to 7 or as prepared by the process of claims 8 or 9 with at least one mono- or di- carboxylic acid or a derivative thereof.

**11.** An oil soluble copolymer obtainable by reacting a polymer as claimed in claim 10 with a nucleophilic reagent chosen from the group consisting of amines, alcohols, amino alcohols and metal compounds

**12.** Use of the oil soluble copolymers as claimed in any one of claims 1 to 7 or as prepared according to the process of any one of claims 8 or 9 or as claimed in any one of claims 10 to 11 as lubricating oil additives

**Patentansprüche**

**1.** Ataktisches Copolymer mit Einheiten, die aus (a) zumindest einem alpha-Olefin, (b) gegebenenfalls Ethylen und (c) zumindest einem nicht-konjugierten Dien stammen, ausgewählt aus der Gruppe, bestehend aus

(i) einem Dien der Formel:

$$CH_2=C(R^1)-R^2-C(R^3)=CH_2 \qquad (I)$$

worin $R^1$ und $R^3$ unabhängig voneinander aus Wasserstoff oder einer Alkylgruppe ausgewählt sind, und $R^2$ eine Alkylenkomponente mit einer Kettenlänge von zumindest 3 Kohlenstoffatomen ist;

(ii) einem Dien der Formel:

$$CH_2=C(R^1)-R^4-C(R^3)=CH-CH_3 \qquad (II)$$

worin $R^1$ und $R^3$ wie für Formel I definiert sind und $R^4$ eine Alkylenkomponente mit einer Kettenlänge von zumindest 1 Kohlenstoffatom ist;

(iii) einem Dien mit einem zyklischen Ring mit einer gespannten Ringdoppelbindung und einem Substituenten an dein Ring mit der Formel

$$=CR^5R^6 \qquad (III)$$

worin $R^5$ und $R^6$ unabhängig voneinander aus Wasserstoff oder einer $C_1$-$C_3$-Alkylgruppe ausgewählt sind; und

(iv) einem Dien mit einem zyklischen Ring mit einer gespannten Ringdoppelbindung und einem Substituenten an dem Ring mit der Formel:

$$-CR^7=CH_2 \qquad (IV)$$

worin $R^7$ Wasserstoff oder eine $C_1$-$C_3$-Alkylgruppe ist, mit dem Vorbehalt, daß, wo das Copolymer Einheiten aufweist, die aus einem Dien der Formel (I) oder aus einem Dien mit einem zyklischen Ring mit einer gespannten Ringdoppelbindung und einem Substituenten an dem Ring der Formel (IV) stammen, zumindest 30 mol-% der Einheiten, die aus dem Dien stammen, anhängende Gruppen mit einer Doppelbindung liefern und weniger als 2 mol-% der Einheiten "H"-Verzweigung liefern.

**2.** Copolymer nach Anspruch 1, wobei das Dien aus der Gruppe, bestehend aus 1,7-Octadien, 1,8-Nonadien, 1,9-Decadien, 1,10-Undecadien und 1,11-Dodecadien, Vinylnorbornen, 5-(1-Methylethyliden)norbomen, 1,4-Hexadien, 1,5-Heptadien, 1,6-Octadien, 1,7-Nonadien, 1,8-Decadien, 1,9-Undecadien, 1,11-Dodecadien, Ethylidennorbomen, Methylennorbornen und 5-(1-Methylethenyl)norbornen) ausgewählt ist.

**3.** Copolymer nach Anspruch 1 oder Anspruch 2, wobei weniger als 1 mol-% der Einheiten, die aus dem Dien der Formel (I) oder einem Dien mit einem zyklischen Ring mit einer gespannten Ringdoppelbindung und einem Substituenten an dem Ring der Formel (IV) stammen, "H"-Verzweigung liefern.

4. Copolymer nach einem der Ansprüche 1 bis 3, wobei der Gehalt der Einheiten, die aus dem Dien stammen, zwischen 0,02 und 15 mol-% liegt.

5. Copolymer nach einem der Ansprüche 1 bis 4, wobei die durchschnittliche Anzahl an Olefinkomponenten pro Copolymerkette 1,1 bis 5 beträgt.

6. Copolymer nach einem der Ansprüche 1 bis 5, wobei das Copolymer einen Viskositätsindex im Beriech von 90 bis 350 aufweist, wie durch ISO 2909 bestimmt.

7. Copolymer nach einem der Ansprüche 1 bis 6, wobei das Copolymer ein zahlenmittleres Molekulargewicht im Bereich von 300 bis 200.000 aufweist.

8. Verfahren zur Herstellung eines ataktischen Copolymers mit Einheiten, die aus (a) zumindest einem alpha-Olefin, (b) gegebenenfalls Ethylen und (c) zumindest einem nicht-konjugierten Dien stammen, ausgewählt aus der Gruppe, bestehend aus:

   (i) einem Dien der Formel:

$$CH_2=C(R^1)-R^4-C(R^3)=CH-CH_3 \qquad (II)$$

   worin $R^1$ und $R^3$ unabhängig voneinander aus Wasserstoff oder einer Alkylgruppe ausgewählt sind, und $R^4$ eine Alkylenkomponente mit einer Kettenlänge von zumindest 1 Kohlenstoffatom ist; und

   (ii) einem Dien mit einem zyklischen Ring mit einer gespannten Ringdoppelbindung und einem Substituenten an dem Ring der Formel:

$$=CR^5R^6 \qquad (III)$$

   worin $R^5$ und $R^6$ unabhängig voneinander aus Wasserstoff oder einer $C_1$-$C_3$-Alkylgruppe ausgewählt sind, wobei das Verfahren das Kontaktieren von (a) zumindest einem alpha-Olefin, (b) gegebenenfalls Ethylen mit (c) zumindest einem nicht-konjugierten Dien, ausgewählt aus (i) oder (ii) oben, in einem Flüssigphasenpolymerisationssystem in einem Polymerisationsreaktor in der Gegenwart eines Metallocenkatalysators umfaßt.

9. Verfahren nach Anspruch 8, wobei das Dien aus der Gruppe, bestehend aus 1,4-Hexadien, 1,5-Heptadien, 1,6-Octadien, 1,7-Nonadien, 1,8-Decadien, 1,9-Undecadien, 1,10-Dodecadien, Ethylidennorbornen, Methylennorbornen und 5-(1-Methylethyliden)norbornen ausgewählt ist.

10. Öllösliches Copolymer, erhältlich durch die Umsetzung eines Copolymers nach einem der Ansprüche 1 bis 7 oder wie durch das Verfahren der Ansprüche 8 oder 9 hergestellt, mit zumindest einer Mono- oder Di-Carbonsäure oder einem Derivat hiervon.

11. Öllösliches Copolymer, erhältlich durch die Umsetzung eines Polymers nach Anspruch 10 mit einem nukleophilen Reagenz, ausgewählt aus der Gruppe bestehend aus Aminen, Alkoholen, Aminoalkoholen und Metallverbindungen.

12. Verwendung der öllöslichen Copolymere nach einem der Ansprüche 1 bis 7, oder wie gemäß dem Verfahren aus einem der Ansprüche 8 oder 9 hergestellt, oder nach einem der Ansprüche 10 bis 11, als Schmierölzusatzstoffe.

**Revendications**

1. Copolymère atactique ayant des motifs dérivés de (a) au moins une alpha-oléfine (b) éventuellement l'éthylène et (c) au moins un diène non conjugué sélectionné dans le groupe constitué par :

(i) un diène de formule :

$$CH_2=C(R^1)-R^2-C(R^3)=CH_2 \tag{I}$$

dans laquelle $R^1$ et $R^3$ sont indépendamment sélectionnés parmi l'hydrogène ou un groupe alkyle, et $R^2$ est un fragment alkylène ayant une longueur de chaîne d'au moins 3 atomes de carbone
(ii) un diène de formule :

$$CH_2=C(R^1)-R^4-C(R^3)=CH-CH_3 \tag{II}$$

dans laquelle $R^1$ et $R^3$ sont tels que définis pour la formule (I) et $R^4$ est un fragment alkylène ayant une longueur de chaîne d'au moins 1 atome de carbone
(iii) un diène ayant un noyau cyclique avec une double liaison de cycle tendu et un substituant sur le cycle de formule :

$$=CR^5R^6 \tag{III}$$

dans laquelle $R^5$ et $R^6$ sont indépendamment sélectionnés parmi l'hydrogène ou un groupe alkyle en $C_1$-$C_3$ et
(iv) un diène ayant un noyau cyclique avec une double liaison de cycle tendu et un substituant sur le cycle de formule :

$$-CR^7=CH_2 \tag{IV}$$

dans laquelle $R^7$ est l'hydrogène ou un groupe alkyle en $C_1$-$C_3$
à condition que là où le copolymère a des motifs dérivés d'un diène de formule (I) ou d'un diène ayant un noyau cyclique avec une double liaison de cycle tendu et un substituant sur le cycle de formule (IV), au moins 30 % en moles de tous les motifs dérivés du diène fournissent des groupes latéraux ayant une double liaison et moins de 2 % en moles desdits motifs fournissent une ramification du type en « H ».

2. Copolymère selon la revendication 1, dans lequel le diène est sélectionné dans le groupe constitué par le 1,7-octadiène, le 1,8-nonadiène, le 1,9-décadiène, le 1,10-undécadiène, le 1,11-dodécadiène, le vinyl-norbornène, le 5-(1-méthyléthylidène)-norbornène, le 1,4-hexadiène, le 1,5-heptadiène, le 1,6-octadiène, le 1,7-nonadiène, le 1,8-décadiène, le 1,9-undécadiène, le 1,10-dodécadiène, l'éthylidène-norbornène, le méthylène-norbornène et le 5-(1-méthyléthényl)-norbornène.

3. Copolymère selon la revendication 1 ou la revendication 2, dans lequel moins de 1 % en moles des motifs dérivés du diène de formule (I) ou d'un diène ayant un noyau cyclique avec une double liaison de cycle tendu et un substituant sur le cycle de formule (IV) fournit une ramification du type en « H ».

4. Copolymère selon l'une quelconque des revendications 1 à 3, dans lequel la teneur en motifs dérivés du diène est comprise entre 0,02 et 15 % en moles.

5. Copolymère selon l'une quelconque des revendications 1 à 4, dans lequel le nombre moyen de fragments oléfiniques par chaîne de copolymère va de 1,1 à 5.

6. Copolymère selon l'une quelconque des revendications 1 à 5, dans lequel le copolymère a un indice de viscosité dans le domaine allant de 90 à 350 comme cela est déterminé par la norme ISO 2909.

7. Copolymère selon l'une quelconque des revendications 1 à 6, dans lequel le copolymère a une masse moléculaire moyenne en nombre dans le domaine allant de 300 à 200 000.

8. Procédé pour la préparation d'un copolymère atactique ayant des motifs dérivés de (a) au moins une alpha-oléfine (b) éventuellement l'éthylène et (c) au moins un diène non conjugué sélectionné dans le groupe constitué par :

(i) un diène de formule :

$$CH_2=C(R^1)-R^4-C(R^3)=CH-CH_3 \qquad (II)$$

dans laquelle $R^1$ et $R^3$ sont indépendamment sélectionnés parmi l'hydrogène ou un groupe alkyle, et $R^4$ est un fragment alkylène ayant une longueur de chaîne d'au moins 1 atome de carbone et
(ii) un diène ayant un noyau cyclique avec une double liaison de cycle tendu et un substituant sur le cycle de formule :

$$=CR^5R^6 \qquad (III)$$

dans laquelle $R^5$ et $R^6$ sont indépendamment sélectionnés parmi l'hydrogène ou un groupe alkyle en $C_1$-$C_3$, lequel procédé comprend l'étape consistant à mettre en contact (a) au moins une alpha-oléfine (b) éventuellement de l'éthylène avec (c) au moins un diène non conjugué sélectionné parmi (i) ou (ii) ci-dessus dans un système de polymérisation en phase liquide dans un réacteur de polymérisation en présence d'un catalyseur métallocène.

9. Procédé selon la revendication 8, dans lequel le diène est sélectionné dans le groupe constitué par le 1,4-hexadiène, le 1,5-heptadiène, le 1,6-octadiène, le 1,7-nonadiène, le 1,8-décadiène, le 1,9-undécadiène, le 1,10-dodécadiène, l'éthylidène-norbornène, le méthylène-norbornène et le 5-(1-méthyléthylidène)-norbornène.

10. Copolymère soluble dans l'huile pouvant être obtenu en faisant réagir un copolymère selon l'une quelconque des revendications 1 à 7 ou comme préparé par le procédé selon les revendications 8 ou 9 avec au moins un acide mono- ou dicarboxylique ou un dérivé de celui-ci.

11. Copolymère soluble dans l'huile pouvant être obtenu en faisant réagir un polymère selon la revendication 10 avec un réactif nucléophile choisi dans le groupe constitué par les amines, les alcools, les aminoalcools et les composés métalliques.

12. Utilisation des copolymères solubles dans l'huile selon l'une quelconque des revendications 1 à 7 ou comme préparés selon le procédé selon l'une quelconque des revendications 8 ou 9 ou selon l'une quelconque des revendications 10 à 11 comme additifs pour huiles de graissage.